# EUROPÄISCHE PATENTSCHRIFT

(11) **EP 3 688 388 B1**
(45) Veröffentlichungstag und Bekanntmachung des Hinweises auf die Patenterteilung: **27.12.2023**
(21) Anmeldenummer: 18769109.2
(22) Anmeldetag: 04.09.2018
(51) Int. Cl.: F25D 29/00, G06Q 10/08

(54) **SYSTEM ZUR AUFBEWAHRUNG VON LEBENSMITTELN IN EINEM KÜHLGERÄT**
SYSTEM FOR SAFE-KEEPING FOODSTUFF IN A REFRIGERATOR
SYSTÈME DE STOCKAGE DE DENRÉES ALIMENTAIRES DANS UN RÉFRIGÉRATEUR

(30) Priorität: 27.09.2017 DE 102017122507
(43) Veröffentlichungstag der Anmeldung: 05.08.2020
(73) Patentinhaber: Cofresco Frischhalteprodukte GmbH & Co. KG, 32427 Minden (DE)
(72) Erfinder: LARISCH, Sven, 32584 Löhne (DE)
(74) Vertreter: Dantz, Jan Henning
(86) Internationale Anmeldenummer: PCT/EP2018/073780
(87) Internationale Veröffentlichungsnummer: WO 2019/063248

(56) Entgegenhaltungen:
- EP-A2- 1 980 807
- DE-A1-102016 110 582
- GB-A- 2 403 707
- US-A- 5 487 276
- US-A1- 2015 302 011
- US-A1- 2016 099 753
- Melitta Europa Gmbh & Co. Kg: "Toppits Foodsaver", , 20. Oktober 2016 (2016-10-20), XP055525350, Gefunden im Internet: URL:https://appadvice.com/app/toppits-food saver/1167006860 [gefunden am 2018-11-20]

## Beschreibung

Die vorliegende Erfindung betrifft ein System zur Aufbewahrung von Lebensmitteln nach dem Oberbegriff des Anspruches 1.

Es gibt Kühlschränke, die eine Kamera aufweisen, um Bilder von den eingelagerten Lebensmitteln an einem Mobiltelefon darstellen zu können. Dadurch sieht der Benutzer, welche Lebensmittel noch fehlen und kann entsprechend einkaufen. Die Haltbarkeit der einzelnen Lebensmittel ergibt sich aus den auf der Verpackung aufgedruckten Daten. Ein solches System ist für industriell hergestellte Lebensmittel einsetzbar, allerdings ist die Verwaltung und Aufbewahrung von selbst zubereiteten Lebensmitteln nicht möglich.

Für selbst zubereitete Lebensmittel sind Behältnisse, wie Boxen mit Verschlusselementen oder Folienbeutel, bekannt, die zur Aufbewahrung der Lebensmittel eingesetzt werden können. Eine Kennzeichnung dieser Aufbewahrungsbehältnisse zur Angabe des Inhalts und Einfrierdatums erfolgt hierbei in der Regel manuell per Schreibutensil auf einem dafür vorgesehenen Beschriftungsfeld. Die Verwaltung und Überwachung solcher Lebensmittel sind daher nur mit hohem Aufwand möglich.

Die US 5,487,276 offenbart eine Aufbewahrungssystem für Lebensmittel, bei dem Behälter mit einem Etikett versehen werden und an einer Eingabestation Informationen über das Lebensmittel eingegeben werden können, um einen Überblick über die Aufbewahrungszeit und das Mindesthaltbarkeitsdatum zu behalten. Die Etiketten können auch vorbedruckt sein.

Es ist daher Aufgabe der vorliegenden Erfindung, ein System zur Aufbewahrung von Lebensmitteln zu schaffen, das eine verbesserte Verwaltung von eingelagerten Lebensmitteln ermöglicht.

Diese Aufgabe wird mit einem System mit den Merkmalen des Anspruches 1 gelöst.

Bei dem erfindungsgemäßen System werden eine Vielzahl von in einer Verpackungseinheit angeordneten Behältnissen zur Aufbewahrung von Lebensmitteln mit unterschiedlichen Codierungen versehen. Dadurch besitzt jedes Behältnis einer Verpackungseinheit bereits ein Mittel zur Identifizierung, das eine verbesserte Verwaltung ermöglicht. Der Benutzer kann somit an einer Eingabestation beim Ablagern eines Behältnisses mit einem Lebensmittel in einem Kühlgerät zumindest Informationen zu der Codierung und dem in dem Behältnis angeordneten Lebensmittel eingeben. Dadurch kann diese Information in einem Speicher abgelegt werden, und über eine Steuereinheit wird jedem Behältnis abhängig von dem Einlagerungsdatum und dem Lebensmittel ein Haltbarkeitsdatum zugeordnet. Dieses Haltbarkeitsdatum kann an einer Anzeigeeinheit zu einem beliebigen Zeitpunkt ausgegeben werden, um den Benutzer über den Ablauf der Haltbarkeit des Lebensmittels zu informieren. Zudem können die eingelagerten Lebensmittel an dem System auch verwaltet werden, so dass der Benutzer gerade bei selbst zubereiteten Lebensmitteln einen schnellen Überblick über Menge, Typ des Lebensmittels sowie dessen Haltbarkeit besitzt.

Erfindungsgemäß wird die Codierung auf die Behältnisse aufgedruckt. Der Benutzer muss sich somit nicht mehr um die Codierung der Behältnisse kümmern, da diese schon auf den Behältnissen vorhanden sind. Vorzugsweise werden die Codierungen aufgedruckt, um eine Entfernung der Codierung oder eine Beschädigung, beispielswiese durch ausgelaufene Flüssigkeit, zu vermeiden. Die Codierung kann dabei ein Zahlen- oder Nummerncode sein, der mit drei bis acht Identifizierungselementen eine eindeutige Zuordnung ermöglicht. Die Behältnisse sind als verschließbare Kunststoffbeutel ausgebildet, die in einer Verpackungseinheit zusammengefasst sind. Die Behältnisse können als Frischhalte- oder Gefrierbeutel ausgebildet sein, die keinen integrierten Verschluss aufweisen sondern über ein gesondertes Verschlusselement verschließbar sind.

In einer weiteren Ausgestaltung der Erfindung ist an einer Eingabestation auch der Aufbewahrungsort eingebbar. Zudem kann die Temperatur des Kühlfaches eingegeben werden, so dass die Haltbarkeit des Lebensmittels relativ präzise berechnet werden kann. Dadurch kann die Steuereinheit vor oder bei Ablauf eines Haltbarkeitsdatums über die Anzeigeeinheit optische und/oder akustische Signale ausgeben. Zudem ist es optional möglich, dass in dem Speicher zahlreiche Rezepte zu verschiedenen Lebensmitteln abgespeichert sind, die an der Anzeigeeinheit ausgebbar sind. Dadurch lässt sich die Funktionalität des Systems über die reine Verwaltung der Lebensmittel hinaus erweitern.

Die Erfindung wird nachfolgend anhand eines Ausführungsbeispiels mit Bezug auf die beigefügten Zeichnungen näher erläutert. Es zeigen:

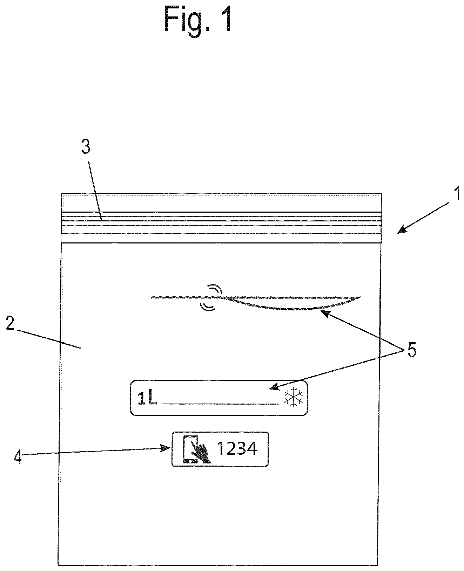

- Figur 1: eine Ansicht eines Behältnisses zur Aufbewahrung von Lebensmitteln;
- Figur 2: eine Ansicht eines Eingabegerätes in einer Eingabesituation, und
- Figur 3: eine Ansicht des Gerätes der Figur 2 bei der Anzeige von Informationen.

Ein Behältnis 1 zur Aufbewahrung von Lebensmitteln umfasst einen Folienbeutel 2, der eine Öffnung aufweist, an der ein Verschlussstreifen 3 vorgesehen ist. Der Verschlussstreifen 3 kann über Rast- oder Klemmprofile oder Schieber geöffnet und verschlossen werden, um ein Lebensmittel in dem Folienbeutel 2 geschützt vor Umgebungseinflüssen zu lagern, vorzugsweise auch abgedichtet. Statt des Verschlussstreifens 3 können auch Klips oder Klammern zum Verschließen des Folienbeutels 2 eingesetzt werden. Der Folienbeutel 2 ist mit einer Codierung 4 bedruckt, die in dem dargestellten Ausführungsbeispiel aus einem Zahlencode von vier Zahlen besteht. Es ist natürlich auch möglich, die Codierung 4 mit weniger oder mehr Ziffern oder Buchstaben vorzugsehen. Die Codierung 4 ist auf den Folienbeutel 2 aufgedruckt und somit durch den Benutzer nicht mehr veränderbar. Zudem sind weitere Markierungen 5 zur Erläuterung auf dem Folienbeutel 2 aufgedruckt.

Mehrere Folienbeutel 2 sind in einer Verpackungseinheit zusammengefasst, beispielsweise 10 oder 20 Folienbeutel 2, wobei jeder Folienbeutel 2 eine unterschiedliche Codierung 4 besitzt. Somit erwirbt der Käufer eine Verpackungseinheit, bei der jeder Folienbeutel 2 schon über die Codierung 4 individuell identifiziert werden kann.

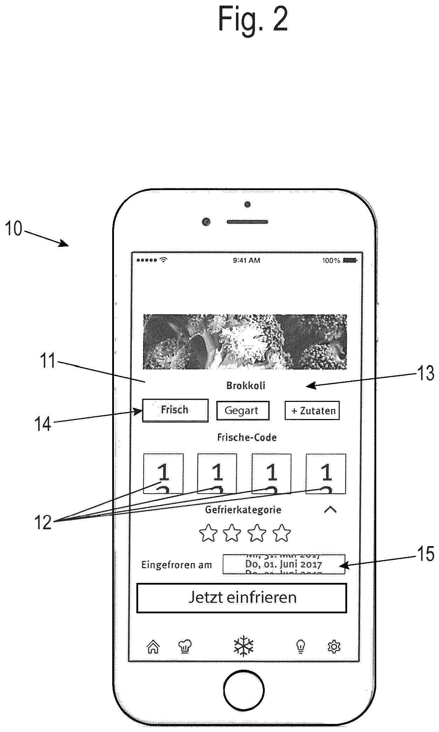

In Figur 2 ist ein Gerät 10 zur Eingabe und Speicherung von Informationen gezeigt, beispielsweise ein Smartphone, Tablet-PC oder ein anderes Gerät. Das Gerät 10 umfasst eine Anzeigeeinheit 11, beispielsweise einen Touchscreen, auf dem Informationen zu dem in dem Behältnis 1 angeordneten Lebensmittel und dessen Aufbewahrungsort eingegeben werden können. Zunächst wird in einem Feld 13 das Lebensmittel, wie "Brokkoli", benannt. In einem weiteren Feld 14 wird dann die Zubereitungsart aufgeführt, nämlich "frisch" oder "gegart". Optional können auch weitere Informationen eingegeben werden. In einem weiteren Feld wird die Codierung 4 bestehend aus einem vierstelligen Zifferncode eingefügt. Zudem wird noch zu dem Aufbewahrungsort die Temperatur eingegeben, insbesondere die Gefrierkategorie. In einem Feld 15 wird das Einfrierdatum, insbesondere der Tag der Eingabe, angezeigt, um eine Vielzahl von Informationen beim Ablegen eines Lebensmittels in einem Kühlgerät in dem Gerät 10 abspeichern zu können. Aufgrund der eingegebenen Informationen kann das Gerät über eine Steuerung ein Haltbarkeitsdatum berechnen und kann zudem Aufbewahrungsort, Aufbewahrungsmengen oder Rezepte zu den Lebensmitteln in einem Speicher als Information ablegen.

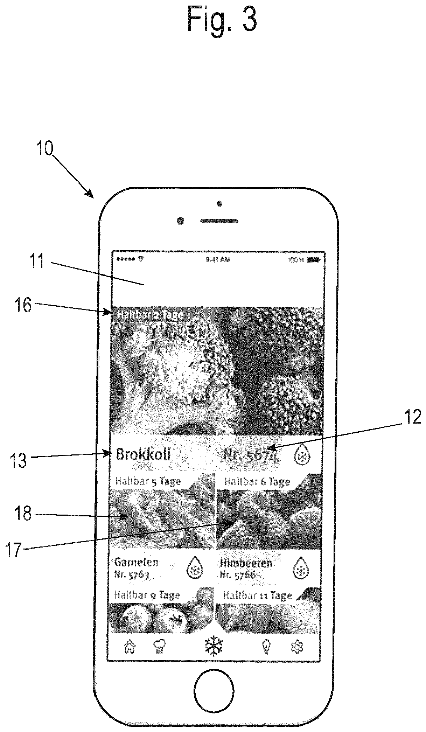

In Figur 3 ist das Gerät 10 in einem Anzeigemodus gezeigt, in dem in der Anzeigeeinheit 11 Informationen zu den aufbewahrten Lebensmitteln vorhanden sind, wobei in dem oberen Feld das eingelagerte Lebensmittel, wie "Brokkoli", visuell und mit einem Wort dargestellt ist, und in einem Feld 12 die Codierung 4 angezeigt wird. In unteren Feldern 17 und 18 können weiter Lebensmittel mit ihrem Haltbarkeitsdatum angezeigt werden, optional können auch Rezepte zu den einzelnen Lebensmitteln oder andere Informationen angezeigt werden.

Über das Gerät 10 kann somit eine Verwaltung der eingelagerten Lebensmittel vorgenommen werden, wobei der Benutzer wahlweise nach Haltbarkeitsdatum, Typ des Lebensmittels oder Aufbewahrungsort selektieren kann. In der Anzeigeeinheit 11 werden dann die gewünschten Informationen angezeigt, und der Benutzer kann auf einfache Weise die Codierung 4 dazu nutzen, das Lebensmittel in dem Kühlgerät zu finden.

### Bezugszeichenliste

- 1: Behältnis
- 2: Folienbeutel
- 3: Verschlussstreifen
- 4: Codierung
- 5: Markierung
- 10: Gerät
- 11: Anzeigeeinheit
- 12: Feld
- 13: Feld
- 14: Feld
- 15: Feld
- 17: Feld
- 18: Feld

## Patentansprüche

1. System zur Aufbewahrung von Lebensmitteln in einem Kühlgerät, mit einer Vielzahl von in einer Verpackungseinheit angeordneten Behältnissen (1) zur Aufbewahrung von Lebensmitteln, die mit unterschiedlichen Codierungen (4) versehen sind, und
- einer Eingabestation (10), in der beim Ablegen eines Behältnisses (1) in das Kühlgerät zumindest Informationen zu der Codierung (4) und dem in dem Behältnis (1) angeordneten Lebensmittel eingebbar sind;
- einem Speicher zum Speichern der eingegebenen Informationen;
- einer Steuereinheit, mittels der jedem Behältnis ein Haltbarkeitsdatum (16) zuordnenbar ist, und
- einer Anzeigeeinheit (11), die an oder vor einem Ablauf eines Haltbarkeitsdatums (16) eine Anzeige ausgibt, die den Benutzer über den Ablauf der Haltbarkeit des Lebensmittels informiert,
**dadurch gekennzeichnet, dass** die Behältnisse (1) als verschließbare Kunststoffbeutel ausgebildet sind und die Codierung (4) auf die Kunststoffbeutel aufgedruckt ist.

2. System nach Anspruch 1, **dadurch gekennzeichnet, dass** die Codierung (4) ein Zahlen- und/oder Buchstabencode ist.

3. System nach Anspruch 1 oder 2, **dadurch gekennzeichnet, dass** an der Eingabestation (10) auch der Aufbewahrungsort eingebbar ist.

4. System nach einem der vorhergehenden Ansprüche, **dadurch gekennzeichnet, dass** an der Eingabestation (10) die Temperatur und/oder die Gefrierkategorie eines Kühlfaches in dem Kühlgerät eingebbar ist.

5. System nach einem der vorhergehenden Ansprüche, **dadurch gekennzeichnet, dass** über die Steuereinheit vor oder bei Ablauf eines Haltbarkeitsdatums (16) über die Anzeigeeinheit (11) optische und/oder akustische Signale ausgebbar sind.

6. System nach einem der vorhergehenden Ansprüche, **dadurch gekennzeichnet, dass** in dem Speicher zahlreiche Rezepte zu verschiedenen Lebensmitteln abgespeichert sind, die an der Anzeigeeinheit (11) ausgebbar sind.

## Claims

1. System for storing foodstuffs in a refrigerating appliance, comprising a plurality of containers (1) arranged in a packaging unit for storing foodstuffs, which are provided with different codings (4), and
- an input station (10) in which at least information on the coding (4) and the foodstuff arranged in the container (1) can be entered when a container (1) is placed in the cooling appliance;
- a memory for storing the information entered;
- a control unit by means of which a best-before date (16) can be assigned to each container, and
- a display unit (11) which, at or before the expiry of a best-before date (16), outputs an indication informing the user of the expiry of the shelf life of the foodstuff,
**characterized in that** the containers (1) are designed as sealable plastic bags and the coding (4) is printed on the plastic bags.

2. System according to claim 1, **characterized in that** the coding (4) is a numerical and/or letter code.

3. System according to claim 1 or 2, **characterized in that** the storage location can also be entered at the input station (10).

4. System according to one of the preceding claims, **characterized in that** the temperature and/or the freezing category of a cooling compartment in the cooling appliance can be entered at the input station (10).

5. System according to one of the preceding claims, **characterized in that** optical and/or acoustic signals can be emitted via the display unit (11) via the control unit before or at the expiry of a best-before date (16).

6. System according to one of the preceding claims, **characterized in that** numerous recipes for various foodstuffs are stored in the memory and can be output on the display unit (11).

## Revendications

1. Système de conservation de produits alimentaires dans un réfrigérateur comprenant un ensemble de récipients (1) placés dans une unité d'emballage pour conserver les denrées alimentaires munies de codes (4) différents, et
- un poste d'entrée (10) dans lequel lors de la dépose d'un récipient (1) dans le réfrigérateur, on introduit au moins des informations de codage (4) de la denrée alimentaire contenue dans le récipient (1),
- une mémoire pour enregistrer les informations introduites,
- une unité de commande avec laquelle on associe une date de péremption (16) à chaque récipient, et
- une unité d'affichage (11) qui émet avant la fin ou à la fin d'une date de péremption (16) un affichage informant l'utilisateur de la fin de la durée de conservation de la denrée alimentaire,
système **caractérisé en ce que**
les récipients (1) sont sous la forme de sachets en matière plastique qui se ferment et le codage (4) est imprimé sur le sachet en matière plastique.

2. Système selon la revendication 1,
**caractérisé en ce que**
le codage (4) est un code en chiffres et/ou en lettres.

3. Système selon la revendication 1 ou 2,
**caractérisé en ce que**
au poste d'entrée (10) on introduit également l'emplacement de conservation.

4. Système selon l'une des revendications précédentes,
**caractérisé en ce que**
au poste d'entrée (10) on introduit la température et/ou la catégorie de congélation d'un compartiment du réfrigérateur.

5. Système selon l'une des revendications précédentes,
**caractérisé en ce que**
on émet par l'unité de commande avant ou au moment de la date de péremption (16), des signaux optiques et/ou acoustiques par l'unité d'affichage (11).

6. Système selon l'une des revendications précédentes,
**caractérisé en ce que**
on enregistre dans la mémoire de nombreuses recettes pour différentes denrées et qui peuvent être émises par l'unité d'affichage (11).
